# EUROPÄISCHE PATENTSCHRIFT

(11) **EP 0 867 417 B1**
(45) Veröffentlichungstag und Bekanntmachung des Hinweises auf die Patenterteilung: **25.07.2001**
(21) Anmeldenummer: 98104860.6
(22) Anmeldetag: 18.03.1998
(51) Int. Cl.: C03C 17/04, C03B 13/14, C03B 13/16

(54) **Formgebungswerkzeug zur Ausbildung von Strukturen in Flachglas**
Moulding device for forming structures in sheet glass
Dispositif de moulage pour façonner des structures dans des feuilles de verre

(30) Priorität: 29.03.1997 DE 19713312
(43) Veröffentlichungstag der Anmeldung: 30.09.1998
(73) Patentinhaber: Schott Glas, 55122 Mainz (DE); CARL-ZEISS-STIFTUNG trading as Schott Glas, 55122 Mainz (DE)
(72) Erfinder: Ostendarp, Heinrich, Dr., 55128 Mainz (DE); Paasch, Marita, Dr., 55124 Mainz (DE)
(74) Vertreter: Fuchs Mehler Weiss & Fritzsche

(56) Entgegenhaltungen:
- EP-A- 0 802 170
- DE-C- 111 216
- DE-C- 223 379
- DE-C- 506 672
- FR-A- 1 531 390
- US-A- 1 261 939
- US-A- 1 528 194
- US-A- 4 397 673
- PATENT ABSTRACTS OF JAPAN vol. 18, no. 542 (C-1261), 17.Oktober 1994 -& JP 06 191865 A (OLYMPUS OPTICAL CO LTD), 12.Juli 1994,
- PATENT ABSTRACTS OF JAPAN vol. 13, no. 211 (C-597), 17.Mai 1989 & JP 01 028238 A (CANON INC), 30.Januar 1989,

## Beschreibung

Die Erfindung bezieht sich auf ein Formgebungswerkzeug zur Ausbildung von Strukturen in Flachglas, das aus einem Basiswerkzeug und einem darauf angeordneten separaten Formwerkzeug mit einer strukturgebenden Oberfläche besteht.

Mit Präzisionsstrukturen versehenes Flachglas wird für Präzisionsanwendungen, insbesondere im Bereich der Gläser mit optischen Funktionen, benötigt. Derartige Gläser sind beispielsweise Displayscheiben von neueren Flachbildschirmgenerationen (Plasma Display Panels = PDP; Plasma Addressed Liquid Crystal = PALC). In diese Flachbildschirmgläser werden Mikrokanalstrukturen für die Ansteuerung einzelner Zeilen oder Spalten eingebracht, die sich über die gesamte aktive Bildschirmbreite oder -höhe erstrecken und in denen über elektrische Entladungen Plasma gezündet wird. Die beidseitige Begrenzung eines einzelnen Kanals wird über rechteckige Stege realisiert, deren Breite möglichst gering (<100*µ*m) ist. Um ein ausreichendes Entladungsvolumen zu erhalten, ist die Höhe der Stege wesentlich größer als deren Breite. Der Abstand der Stege sollte möglichst gering sein. Derzeit werden in Kleinserien typische Werte zwischen 360*µ*m und 640*µ*m erreicht. Dabei beträgt die Höhe der Stege etwa 150 *µ*m bis 250 *µ*m bei 50 *µ*m bis 100 *µ*m Breite.

Bei der Strukturierung dieser Flachbildschirmgläser, die am Beispiel eines 25"-PALC-Schirmes die Größe von 360mm x 650mm aufweisen, kommt es wegen der späteren Positionierung der Elektroden entscheidend auf die genaue laterale Dimensionierung und relative Positionier- und Reproduziergenauigkeit der Kanäle und damit auf die Formstabilität des Formgebungswerkzeuges an. Wenn man beispielsweise von einer Heißformgebung mittels eines konventionellen Chrom-Nickel-Stahlwerkzeuges ausgeht, so liegt der Ausdehnungskoeffizient bei ca. 12 x 10⁻⁶/K. Bei beispielsweise 360mm Werkzeuglänge, wie für einen 25" PALC-Bildschirm erforderlich, ergibt dies immerhin pro K Temperaturschwankung eine Längenänderung von ca. 4*µ*m. Wenn man davon ausgeht, daß die erforderliche Positioniergenauigkeit der Elektroden in den Mikrokanälen im Bereich von ± 10*µ*m liegt können also ±2,5K Temperaturschwankung im Strukturwerkzeug erhebliche Probleme bereiten. Bei größeren Bildschirmen, wie beispielsweise 42"-Bildschirmen, sind die zulässigen Temperaturschwankungen entsprechend geringer.

Bei anderen Anwendungen von Flachgläsern mit Präzisionsstrukturen sind die Probleme ähnlich gelagert.

Mit dem eingangs bezeichneten Formgebungswerkzeug können die Strukturen an dem Flachglas auf zwei typische Wegen ausgeformt werden. Der erste Weg ist eine Heißformgebung, bei der das erhitzte Formgebungswerkzeug mit seiner strukturgebenden Oberfläche auf einer Seite des Flachglases in das ggf. erwärmte Glasmaterial gedrückt wird und in der Glasoberfläche die Strukturen ausformt.

Bei dem zweiten Weg werden die Vertiefungen in der strukturgebenden Oberfläche des Formgebungswerkzeuges mit einem pastenförmigen Material ausgefüllt, wobei dieses Material beim Kontakt mit der Glasoberfläche auf diese aufgetragen und ausgehärtet wird. Dies geschieht gewöhnlicherweise unter entsprechender Wärmezufuhr.

Bei beiden Wegen tritt jedoch ein hoher Werkzeugverschleiß an der strukturgebenden Oberfläche auf, der bei geringen geforderten Strukturradien einen ständigen Austausch des vollständigen teuren Formgebungswerkzeuges mit einem erheblichen Umrüstaufwand erfordert.

Durch die DE-PS 111 216 und die US-PS 1,261,939 sind die eingangs bezeichneten Formgebungswerkzeuge bekannt geworden, die einen ständigen teuren Austausch des kompletten Formgebungswerkzeuges infolge des Werkzeugverschleißes an seiner strukturgebenden Oberfläche vermeiden.

Diese Schriften zeigen ein Formgebungswerkzeug mit einer strukturgebenden Oberfläche zur Ausbildung von Strukturen in Flachglas, das aus einem Basiswerkzeug (im Fall der DE-PS 111 216 sind es Walzen oder Walz- bzw. Preßplatten, im Fall der US-PS 1,261,939 sind es "rollers") und einem darauf angeordneten separaten Formwerkzeug mit der strukturgebenden Oberfläche besteht (im Fall der DE-PS sind es die Gewebe oder Geflechte, und im Fall der US-PS die "plates" 196).

Im Verschleißfall muß daher nur das separate Formwerkzeug mit relativ geringem Umrüstaufwand ersetzt werden, wodurch die Werkzeug- und damit die Herstellungskosten für das strukturierte Flachglas gesenkt werden.

Bei der DE-PS bestehen die Walz- oder Preßplatten typischerweise aus Metall, d.h. sind thermisch gut leitend mit hoher thermischer Dehnung, wogegen das Formwerkzeug, das Gewebe oder Geflecht, eine sehr geringe thermische Leitfähigkeit mit einem geringen thermischen Ausdehnungskoeffizienten aufweist. Gleiches gilt für die US-PS. Hier bestehen die "rollers" und "plates" beide typischerweise aus Metall.

Um mit dem bekannten Formgebungswerkzeug eine Heißformgebung durchzuführen, muß das gesamte Formgebungswerkzeug in nachteiliger Weise mit hohem Energieaufwand aufgewärmt werden. Da das Basiswerkzeug eine hohe thermische Leitfähigkeit sowie Dehnung und das Formwerkzeug aus einem Material niedriger thermischer Leitfähigkeit sowie Dehnung besteht, sind die bekannten Formgebungswerkzeuge hohen thermischen Wärmedehnungseinflüssen ausgesetzt.

Der Erfindung liegt die Aufgabe zugrunde, das eingangs bezeichnete Formgebungswerkzeug so auszubilden, daß eine Reduktion thermischer Wärmedehnungseinflüsse sowie eine Einsparung von Energie beim Aufwärmen des Formgebungswerkzeuges ermöglicht wird.

Die Lösung dieser Aufgabe gelingt gemäß der Erfindung dadurch, daß das Basiswerkzeug aus einem Material mit geringer thermischer Leitfähigkeit und Dehnung sowie das Formwerkzeug aus einem Material mit höherer thermischer Wärmeleitfähigkeit besteht.

Durch den erfindungsgemäßen Aufbau des Formgebungswerkzeuges kann mit großem Vorteil erreicht werden, daß die Temperatur des Basiswerkzeugs gering gehalten werden kann und nur das Formwerkzeug vorzugsweise von außen erwärmt werden muß. Die benötigte Energie ist dadurch deutlich geringer als wenn auch das Basiswerkzeug aufgeheizt werden müßte. Die Wärmeenergie kann durch Laser, elektrisch, induktiv oder andere geeignete Weise zugeführt werden.

Ferner sind bei dem erfindungsgemäßen Formgebungswerkzeug die Wärmedehnungseinflüsse drastisch reduziert, da nur das Formwerkzeug erwärmt werden muß.

Durch die Trennung des Formwerkzeugs vom Basiswerkzeug, das durch eine Walze oder einen Stempel gebildet werden kann, kann auch für das Basiswerkzeug ein Material mit geringer thermischer Dehnung und hoher Reibfestigkeit, beispielsweise ein spezielles Keramikmaterial, das unter dem Produktnamen Quarzal bekannt geworden ist, verwendet werden. Bei der Auswahl des separaten Formwerkzeuges kann anderen Faktoren, wie beispielsweise eine minimalen Verklebeneigung mit dem Glas, hohe Verschleißfestigkeit, hohe Temperaturbeständigkeit und hohe Wärmeleitfähigkeit, wie sie z.B. durch Chrom-Nickel-Stähle oder Platin-Gold-Legierungen erzielt werden, Rechnung getragen werden.

Gemäß einer Ausgestaltung der Erfindung wird das Formwerkzeug durch ein entsprechend strukturiertes dünnes Blech gebildet, was eine sehr einfache und wirksame Ausführungsform erlaubt.

Besondere Vorteile werden gemäß einer weiteren Ausgestaltung der Erfindung erzielt, wenn das strukturierte Blechteil am Basiswerkzeug lösbar und von ihm auf das Flachglas abwickelbar befestigt ist. Bei einem derartig ausgebildeten Werkzeug kann das Formwerkzeug während des Abrollens des Basiswerkzeuges von diesem abgewickelt, bei der Heißformung in bzw. mit eingefüllter Paste auf das Glas gedrückt und dort während des Aushärtens der Strukturen auf dem Flachglas belassen werden.

Wegen der geringen Wärmekapazität des separaten Formwerkzeuges im Vergleich zu einem zusammenhängenden Werkzeug tritt eine wesentlich schnellere Abkühlung der angeformten Strukturen ein, was ein präzises Ausformen dieser Strukturen mit Vorteil nach sich zieht.

Das Basiswerkzeug wird dabei vorzugsweise durch eine Walze gebildet, was eine einfache großflächige Aufbringung der Strukturen durch ein Abrollen des Formgebungswerkzeuges erlaubt.

Anstelle eines strukturierten Blechteiles kann das Formwerkzeug auch dadurch gebildet werden, daß ein Bandmaterial beabstandet auf einem walzenförmigen Basiswerkzeug befestigt ist. Ein derartiges Formgebungswerkzeug erlaubt durch die zwischen den Bändern befindlichen Spalte mit einfachen Mitteln eine linienförmige Strukturierung.

Wenn gemäß einer Weiterbildung der Erfindung achsenparallel beabstandet zu der als Basiswerkzeug dienenden Walze eine zweite Hilfswalze vorgesehen ist und das Bandmaterial über beide Walzen über mehrere Umrundungen beabstandet abwickelbar ist unter kontinuierlichem Zuführen und Abführen des Bandmaterials, bleibt analog dem abgewickelten Blechteil in dem Raum zwischen beiden Walzen das formgebende Werkzeug für eine bestimmte Zeitdauer zum Stabilisieren in den Strukturen und verhindert ein Zerfließen der Konturen.

Weitere Ausgestaltungen sowie Weiterbildungen der Erfindung ergeben sich anhand von in den Zeichnungen dargestellten Ausführungsbeispielen.

Es zeigen:
- Figur 1: in einer Prinzipdarstellung eine Vorrichtung zur Heißformgebung von Strukturen in einem Flachglas mit Aufheizen der strukturgebenden Oberfläche eines erfindungsgemäßen Formwerkzeuges, das auf einem Basiswerkzeug aufgespannt ist, durch einen Laser,
- Figur 2: in einer vergrößerten Darstellung eine Ausführungsform eines Formgebungswerkzeuges mit einem Basiswerkzeug und einem separaten Formwerkzeug,
- Figur 3: ein zweiteiliges Formgebungswerkzeug gemäß Figur 2 mit einer Walze als Basiswerkzeug und einem um diese Walze gewickelten perforierten Blech als formgebendes Werkzeugteil,
- Figur 4: ein zweiteiliges Formgebungswerkzeug entsprechend Figur 3, bei der jedoch das formgebende Werkzeugteil in Gestalt des perforierten Blechs während des Abrollens der Basiswalze von dieser abgewickelt, in das Glas gedrückt wird und während der Abkühlphase im Glas verbleibt,
- Figur 5: ein zweiteiliges Formgebungswerkzeug mit einer Basiswalze, die mehrfach mit einem Bandmaterial schraubenförmig umwickelt ist,
- Figur 6: ein Formgebungswerkzeug bestehend aus zwei mehrfach mit einem Bandmaterial als formgebendes Werkzeug umwickelten achsparallen Walzen, von denen eine die Basiswalze ist, und
- Figur 6A: eine Erweiterung der Ausführung nach Figur 6 um eine Spannwalze zwecks Spannen des Bandmaterials zur Kompensation thermischer Dehnungen des Formwerkzeuges während der Aufheizung.

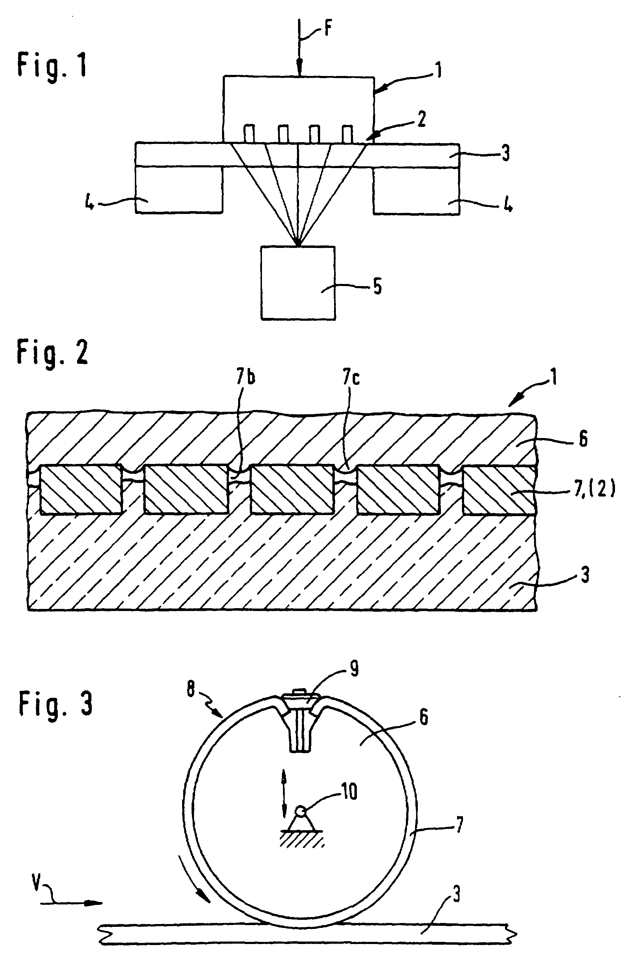

Die Figur 1 zeigt eine Vorrichtung für ein Verfahren zur Heißformgebung von Präzisionsstrukturen - hier in Form von Kanälen, die durch Stege getrennt sind - in einem Flachglas 3, im vorliegenden Ausführungsbeispiel ein Flachglas für einen Flachbildschirm mit Mikrokanalstrukturen. Die Vorrichtung sieht ein erwärmtes Formgebungswerkzeug 1 mit einer separaten strukturgebenden Oberfläche 2 vor, das mittels einer Kraft F auf der Oberseite des Flachglases 3 in das Glasmaterial gedrückt wird, um dort die gewünschten Präzisionsstrukturen auszuformen. Die Vorrichtung weist ferner Gegenkraftaufnahmen 4 auf, um die Kraft F in bezug auf die Glasplatte 3 zu kompensieren. Das Formgebungswerkzeug 1 wird dabei erst kurz vor und/oder während der Kontaktierung mit der Glasoberfläche von aussen lokal an der strukturgebenden Oberfläche 2 bis zu einer von der Tiefe der Strukturen vorgegebenen Obeflächentiefe auf eine Temperatur erwärmt, daß bei Berührung des Glases ein die Strukturen ausbildendes Aufschmelzen erfolgt. Im vorliegenden Ausführungsbeispiel wird dabei zum lokalen äusserem Aufwärmen der strukturgebenden Oberfläche 2 mittels eines Lasers 5 eine Laserstrahlung durch das Flachglas 3 auf die strukturgebende Oberfläche 2 des Formgebungswerkzeuges 1 gerichtet. Alternativ kann auch eine induktive oder elektrische Widerstandsheizung vorgesehen sein. Dadurch, daß die Einbringung der Wärmeenergie lokal nur an der strukturgebenden Oberfläche stattfindet, kann mit Vorteil eine vollständige Aufheizung des Werkzeuges und des Flachglases umgangen werden.

Der Laser 5 ist so ausgewählt, daß er einen Laserstrahl erzeugt, der für das Glas eine möglichst hohe Transmission aufweist, d.h. kein nennenswertes Aufheizen des Glases stattfindet, und die strukturgebende Oberfläche 2 auf eine derartige Temperatur aufheizt, daß bei der Berührung des Glases ein Aufschmelzen stattfindet.

Als Laserquellen eignen sich beispielsweise Nd-YAG-Laser (Wellenlänge 1064nm) und Hochleistungsdiodenlaser (Wellenlänge etwa 800nm). Zur gezielten Einbringung der Laserstrahlung ist es notwendig, wie in Figur 1 skizzenhaft angedeutet, konstruktive Maßnahmen zur Führung des Strahles auf das Werkzeug 1 bzw. dessen getrennte strukturgebende Oberfläche 2 vorzusehen, was im Können des Fachmannes liegt.

Der mit dem eingangs erwähnten hohen Werkzeugverschleiß des Formgebungswerkzeuges 1 verbundene hohe Kosten- und Umrüstaufwand kann mit Vorteil dadurch umgangen werden, daß, wie im besonderen aus Figur 2 deutlich wird, die allein dem Verschleiß unterliegende strukturgebende Oberfläche 2 des Formgebungswerkzeuges 1 durch ein separates formgebendes Werkzeug 7 ausgebildet wird, das lösbar an einem Basiswerkzeug 6 befestigt wird. Dieses formgebende Werkzeug kann, wie dargestellt werden wird, durch verschiedenartige Bauteile gebildet werden. Im Ausführungsbeispiel nach Figur 2 ist ein dünnes strukturiertes Blech 7 vorgesehen, das den auszuformenden Stegen konforme Durchbrüche 7b aufweist. In die Oberfläche des Basiswerkzeuges 6 sind dabei, wie in Figur 2 skizziert, den Durchbrüchen 7b entsprechende Strukturen 7c zur Positionierung des Bleches eingebracht. Diese Struktuen sind im Falle der Anwendung bei Flachbildschirmgläsern zudem wesentlich einfacher zu erzeugen als ein strukturiertes Einkomponenten-Werkzeug zur direken Formgebung. Das dünne Blech, das die strukturgebende Oberfläche 2 bildet, kann Stärken von etwa 50*µ*m bis 600*µ*m besitzen, bevorzugt sind für Displayanwendungen etwa 100 bis 250*µ*m. Die Abstände der zur Ausbildung der Stege notwendigen Durchbrüche 7b (Schlitze) im Blech betragen etwa 150-750*µ*m, Anstelle der Durchbrüche 7b im Blechteil 7 können auch Einbuchtungen, wie die in der Drucktechnik verwendeten Näpfchen, vorgesehen sein.

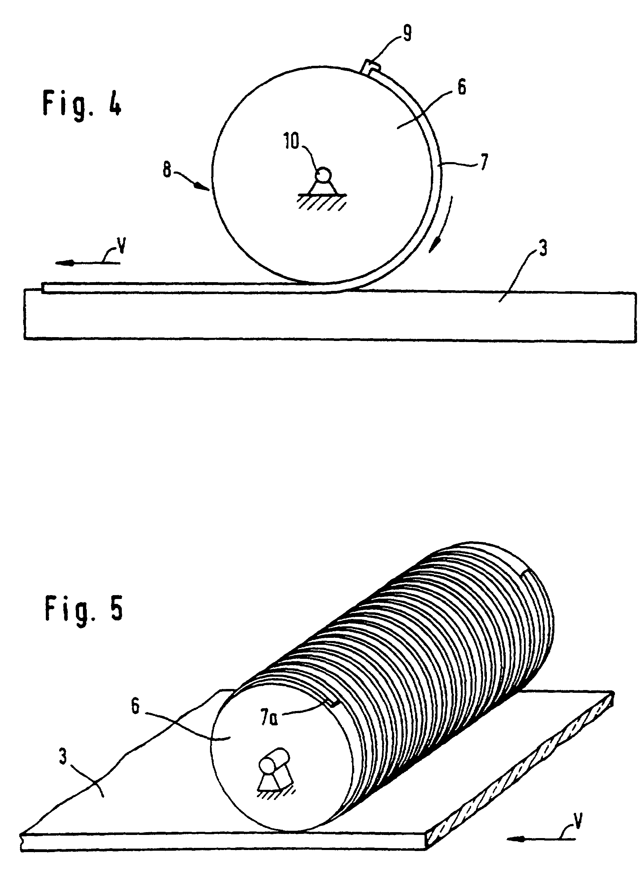

Ein weiterer Vorteil der Trennung zwischen Basiswerkzeug 6 und formgebendem Werkzeug 7 bzw. 2 besteht noch darin, daß nach der Formgebung des Glases 3 das formgebende Werkzeug 7 im Glas belassen werden kann, bis dieses abgekühlt ist. Eine solche Möglichkeit wird später noch anhand der Figur 4 erläutert. Im Vergleich zur Belassung eines vollständigen konventionellen Werkzeuges in der Glasstruktur tritt wegen der geringen Wärmekapazität des Formwerkzeuges eine wesentlich schnellere Abkühlung ein. Insbesondere bei segmentiertem, mit Durchbrüchen versehenen Formwerkzeugen wie im Fall des Bleches 7 nach Figur 2, werden während der Abkühlung Spannungen zwischen Glas 3 und dem Formwerkzeug 1 minimiert, da thermische Dehnungen des Bleches durch die Durchbrüche kompensiert werden.

Das Auslösen des Formwerkzeuges 7 kann durch eine Konizität der erhabenen Teile der strukturgebenden Oberfläche 2 gefördert werden.

Das dem Verschleiß unterliegende Blech 7 kann, ohne das Basiswerkzeug zu wechseln, ausgetauscht werden. Hierzu sind verschiedene, später noch beschriebene Vorrichtungen, insbesondere Schnellspannvorrichtungen einsetzbar.

Durch die Trennung des Formgebungswerkzeuges, nämlich des strukturierten Bleches 7 vom Basiswerkzeug 6, das durch eine Walze oder einen Stempel gebildet werden kann, kann mit Vorteil für das Basiswerkzeug 6 ein Material mit geringer thermischer Dehnung und hoher Reibfestigkeit, beispielsweise ein spezielles Keramikmaterial, verwendet werden. Bei der Auswahl des separaten Formwerkzeuges 7 kann anderen Faktoren, wie beispielsweise einer minimalen Verklebeneigung mit den Glas, hoher Verschleißfestigkeit, hoher Temperaturbeständigkeit und hoher Wärmeleitfähigkeit, wie sie z.B. durch die erwähnten Chrom-Nickel-Stähle oder Platin-Gold-Legierungen erzielt werden, Rechnung getragen werden.

So ist es denkbar, als keramischen Werkstoff für das Basiswerkzeug 6 ein Produkt zu verwenden, das unter dem Handelsnamer Quarzal bekannt geworden ist, das einen sehr geringen Ausdehnungskoeffizienten von 0,56 x 10⁻⁶/K besitzt. Im Vergleich zur Verwendung von Stahl als Basiswerkzeug sind bei gleichen zulässigen Längenschwankungen etwa 20-fache Temperaturschwankungen zulässig. Dieser keramische Werkstoff besitzt auch eine geringe Wärmeleitfähigkeit, Nimmt man zugleich für das Formwerkzeug einen gut wärmeleitenden Werkstoff, z.B, ein strukturiertes Blechteil gemäß Figur 2, dann ist bei äußerer Aufheizung gemäß einem weiteren Vorteil des Zwei-Komponentenwerkzeuges eine ausgeprägte lokale isolierte Erwärmung auf die vorgegebene Oberflächentiefe möglich. Da dieser Werkstoff auch gleichzeitig eine schlechte elektrische Leitfähigkeit besitzt, ist für das Basiswerkzeug 6 alternativ zum Laser gemäß Figur 1 auch eine induktive oder elektrische Heizung zur Aufheizung des Formwerkzeuges 7 möglich.

Für die Ausbildung des Formgebungswerkzeuges, bestehend aus dem Basiswerkzeug 6 und dem separaten Formwerkzeug 7, sind verschiedene Ausführungsformen möglich, von denen einige anhand der Figur 3 und folgende beschrieben werden. Die Figur 3 zeigt ein als Walze 8 ausgebildetes Formgebungswerkzeug mit dem Basiswerkzeug 6 und dem Formwerkzeug 7, hier ein perforiertes Blech wie in Figur 2, das mittels einer Spannvorrichtung 9 an dem Basiswerkzeug 6 befestigt ist. Die Drehachse 10 der Walze 8 ist in horizontaler Richtung ortsfest gelagert. Das Glas 3 wird mit der Vorschubgeschwindigkeit V quasi unter der Walze 8 durchgeführt, die sich entsprechend der Pfeilrichtung dreht und beim Abrollen über die Oberfläche des Flachglases 3 die gewünschten Strukturen aufbringt. Die Walze 8 ist dabei vorzugsweise in vertikaler Richtung weg- oder kraftgesteuert, um die Eindringtiefe in das Glas 3 oder das Aufbringen von pastenförmigem Material zu steuern. Die Vorschubgeschwindigkeit des Flachglases 3 liegt abhängig vom Walzendurchmesser bei 0,1-1m/min.

Bei der dem Tiefdruck angelehnten Ausführungsform wird somit das gesamte Basiswerkzeug mit dem Formwerkzeug kontaktiert. Durch entsprechende, dem Tiefdruck entnommene Spanntechniken 9 wird dabei ein planes Anliegen des Formwerkzeuges 7 am Basiswerkzeug 6 gewährleistet.

Um die Walzenachse 10 so zu haltern, daß sie nur in vertikaler Richtung, wie durch die Pfeile angedeutet, verschiebbar ist, stehen dem Fachmann verschiedene Konstruktionsmöglichkeiten zur Verfügung. Die Anordnung kann dabei auch so getroffen werden, daß die Walze 8, die mit einer relativ großen Kraft F gegen das Glas 3 gedrückt wird, sich allein durch den Vorschub der Glasplatte 3 mitdreht. Es kann allerdings auch ein ergänzender Antrieb für die Walzenachse 10 vorgesehen sein.

Die Figur 4 zeigt eine andere Ausführungsform für die Einbringung der gewünschten Struktur in das mit dem Vorschub V horizontal bewegte Flachglas 3 mittels einer Walze 8, das entsprechend der Figur 3 aufgebaut ist. Im Gegensatz zu der Ausführungsform nach Figur 3 wird während des Rollens der Walze 8 das Formwerkzeug in Form des strukturiertem Bleches 7 in das Glas 3 gedrückt, vom Basiswerkzeug 6 abgewickelt und dort während der Abkühlphase belassen. Hieraus ergibt sich während der Abkühlphase eine mechanische Stabilisierung der Glasstruktur (das Formwerkzeug 7 verhindert ein Zerfließen des noch flüssigen Glases ), die bei konventionellen Heißformgebungsprozessen nicht erzielt wird. Nach der Formgebung der Strukturen im Flachglas 3 kann das abgekühlte Formwerkzeug 7 aufgrund der größeren thermischen Kontraktion gegenüber dem Glas 3 wieder leicht aus der geformten Struktur entfernt werden. Ein leicht konischer Verlauf der erhabenen Teile des Formwerkzeuges 7 unterstützt dieses Auslösen.

Eine weitere Ausführungsform ist in Figur 5 dargestellt, bei der das Formwerkzeug nicht, wie in den Figuren 3 und 4, als zusammenhängendes. strukturiertes Blech, sondern als Bandmaterial 7a auf das walzenförmige Basiswerkzeug 6 schraubenförmig aufgewickelt ist. Die Ausführungsform nach Figur 5 stellt sozusagen eine Abwandlung der Ausführungsform von Figur 3 dar, bei der als Formwerkzeug anstelle eines zusammenhängenden Bleches 7, an einem Walzenende beginnend, das Bandmaterial 7a um eine Basiswalze 6 entlang einem schraubenförmig vorstrukturiertem Steg gewickelt wird, der auch der Abstandseinhaltung des Bandmaterials dient. Gegenüber der Ausführungsform nach Figur 3 besteht die Einschränkung darin, daß zwischen den auf der Basiswalze 6 befindlichen Bandwicklungen ein Spalt besteht. Dadurch ist jedoch die Ausführungsform nach Figur 5 prädestiniert für die Einbringung von Linienstrukturen in das Flachglas 3, wie sie beispielsweise bei den eingangs erwähnten Flachbildschirmen aufgebracht werden müssen.

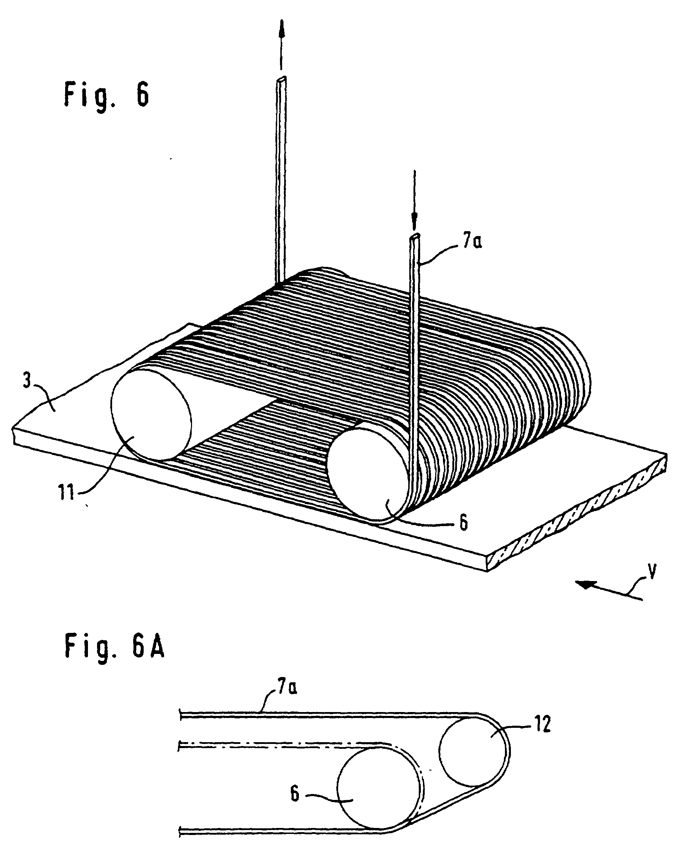

Eine weitere Ausführungsform, bei der das Formwerkzeug nicht als zusammenhängendes Blech, sondern als Bandmaterial 7a entsprechend Figur 5 ausgestaltet ist, ist in Figur 6 dargestellt. Während bei der Ausführungsform nach Figur 5 das Bandmaterial fest auf der Walze 6 angebracht ist und diese Walze 6 mit dem Bandmaterial 7a vollständig über die Oberfläche des Glases 3 abrollt, zeigt die Figur 6 eine Ausführungsform, bei der, ähnlich wie in Figur 4, das Formwerkzeug, das Bandmaterial 7a für eine vorgegebene Zeit in den auszuformenden Strukturen nach dem Aufschmelzen des Glases belassen wird. Die Ausführungsform nach Figur 6 sieht zu diesem Zweck nach Art einer bekannten Wafersäge zwei achsparallele Walzen vor, eine Basiswalze 6 und eine Hilfswalze 11. Die Basiswalze 6, auf deren einem Ende sich die Bandmaterialzufuhr gemäß dem Pfeil befindet, ist mit senkrecht zur Walzenachse geschlossenen Ringen zur Führung des Bandmaterials 7a versehen, die auch zur Abstandseinstellung des Bandmaterials dienen. Die Basiswalze 6 dient dazu, das Bandmaterial 7a zur Strukturgebung in das Flachglas 3 einzudrücken, um es dann zur Strukturerhaltung während der Abkühlphase im Glas 3 zu belassen. Hieraus ergibt sich während der Abkühlphase eine mechanische Stabilisierung der Glasstruktur (kein Zerfließen) wie bei der Ausführungsform nach Figur 4, die bei konventionellen Heißformgebungsprozessen nicht erzielt wird. Nach der Strukturierung wird das abgekühlte formgebende Bandmedium 7a mittels der zur Basiswalze 6 achsparallelen Hilfswalze 11 aus der Struktur entfernt. Diese Hilfswalze ist vorzugsweise nicht strukturiert, um eventuelle Temperatur- und damit verbundene Längenunterschiede zur Basiswalze 6 kompensieren zu können.

Auf dem einen Ende dieser Hilfswalze befindet sich auch die Abfuhr des Bandmaterials gemäß dem gezeigten Pfeil. Es ist auch möglich, mehrere Bandzu- und Abführen zu realisieren.

Die Führung des Bandes 7a auf der hinteren Hilfswalze 11 erfolgt praktisch durch den Vorschub des Glases 3, da das Glas nach der Strukturbildung durch das auf der Basiswalze lokalisierte Bandmaterial sehr schnell erstarrt und das Band 7a dadurch praktisch bis zum Abheben an der Hilfswalze 10 lateral fixiert ist.

Die Breite des die Struktur formenden Bandes 7a beträgt bei Displayanwendungen etwa 150-750*µ*m abzüglich der Stegbreite von 50-100*µ*m. vorzugsweise 200-600*µ*m. Es ist auch möglich, Bänder mit einer Breite von unterhalb 150*µ*m zu verwenden, jedoch nimmt dann die Reißfestigkeit des Bandes immer mehr ab. Der Abstand der Bänder voneinander, vorgegeben durch die Führungsringe auf der Basiswalze 6, soll etwa 20-120*µ*m betragen, vorzugsweise so gering wie möglich sein. Für das Bandmaterial der Ausführungsformen nach den Figuren 5 und 6 bestehen hinsichtlich des Werkstoffes, aus dem sie gebildet werden, die im Zusammenhang mit der Ausführungsform nach Figur 1 beschriebenen Randbedingungen hinsichtlich des Verklebens mit dem Glas und der Kostensituation. Da insoweit eine Platin-Gold-Legierung auf der einen Seite besondere Vorteile hinsichtlich des Nichtverklebens mit dem Glas besitzt, auf der anderen Seite jedoch sehr teuer ist. muß ein massiv aus diesem Werkstoff bestehendes Band rückgeschmolzen werden. Um diesen Aufwand zu vermeiden, kann alternativ als Grundmaterial ein Stahlband, das eine entsprechende Zugfestigkeit aufweist, zu verwenden, das mit einer Anti-Klebe-Schicht versehen ist.

Der Abstand zwischen den Walzen 6 und 11 kann wegen der schnellen Abkühlung des Bandmaterials 7a im Glas vergleichsweise gering bis zur näherungsweisen Berührung gehalten werden. Es muß sichergestellt werden, daß das Bandmaterial 7a einige Sekunden in der aufgeschmolzenen Struktur des Flachglases 3 bleibt, bis diese Struktur abgekühlt ist. Der Richtwert eines Abstandes der Walzenachsen von 200 mm gilt für eine bestimmte Vorschubgeschwindigkeit; wenn diese sich ändert, so ändern sich auch entsprechend die vorgegebenen Werte des Abstandes und der Verweildauer des Bandmaterials im Glas.

Weil durch das Aufwärmen des Bandmaterials 7a vor und/oder während der Kontaktierung dieses sich durch thermischen Einfluß dehnt, ist es gemäß der Ausführungsform in Figur 6a vorteilhaft, eine dritte, nicht strukturierte Walze 12 als Spannwalze vorzusehen, durch die das Bandmaterial gespannt wird. Das Bandmaterial ist hierdurch nur noch über einen kleinen Winkelbereich mit der Basiswalze kontaktiert. Zur Ausbildung der Anordnung nach Figur 6a stehen dem Fachmann entsprechende Konstruktionen zur Verfügung.

## Patentansprüche

1. Formgebungswerkzeug (1) zur Ausbildung von Strukturen in Flachglas (3), das aus einem Basiswerkzeug (6) und einem darauf angeordneten separaten Formwerkzeug (7, 7a) mit einer strukturgebenden Oberfläche (2) besteht, dadurch gekennzeichnet, daß das Basiswerkzeug (6) aus einem Material mit geringer thermischer Leitfähigkeit und Dehnung sowie das Formwerkzeug (7, 7 a) aus einem Material mit höherer thermischer Wärmeleitfähigkeit besteht.

2. Formgebungswerkzeug nach Anspruch 1, dadurch gekennzeichnet, daß das Basiswerkzeug (6) aus Keramik besteht.

3. Formgebungswerkzeug nach Anspruch 1 oder 2, dadurch gekennzeichnet, daß das Formwerkzeug (7) durch ein strukturiertes Blechteil gebildet ist, das Durchbrüche (7b) oder Einbuchtungen zur Formgebung besitzt.

4. Formgebungswerkzeug nach Anspruch 3, dadurch gekennzeichnet, daß das Blechteil eine Stärke von 50 *µ* m bis 600 *µ*m, vorzugsweise von 100 *µ*m bis 250 *µ*m besitzt.

5. Formgebungswerkzeug nach Anspruch 4, dadurch gekennzeichnet, daß die Abstände der Durchbrüche (7b) oder Einbuchtungen im Bereich von 150 bis 750 *µ*m liegen.

6. Formgebungswerkzeug nach einem der Ansprüche 3 bis 5, dadurch gekennzeichnet, daß das strukturierte Blechteil (7) lösbar am Basiswerkzeug (6) befestigt ist.

7. Formgebungswerkzeug nach Anspruch 6, dadurch gekennzeichnet, daß das strukturierte Blechteil (7) am Basiswerkzeug (6) von ihm abwickelbar befestigt ist.

8. Formgebungswerkzeug nach einem der Ansprüche 1 bis 7, dadurch gekennzeichnet, daß das Basiswerkzeug (6) eine Strukturierung (7c) zur Fixierung des Formwerkzeuges (7) auf dem Basiswerkzeug aufweist.

9. Formgebungswerkzeug nach einem der Ansprüche 1 bis 8, dadurch gekennzeichnet, daß das Basiswerkzeug (6) eine Walze ist.

10. Formgebungswerkzeug nach Anspruch 9, dadurch gekennzeichnet, daß das Formwerkzeug (7) aus einem um das als Walze ausgebildete Basiswerkzeug (6) gewickelten Bandmaterial (7a) besteht.

11. Formgebungswerkzeug nach Anspruch 10, dadurch gekennzeichnet, daß die Walze des Basiswerkzeuges eine Führungsstruktur für das Bandmaterial mit schraubenförmig angeordneten Stegen aufweist.

12. Formgebungswerkzeug nach Anspruch 11, dadurch gekennzeichnet, daß die Breite des Bandes (7a) im Bereich von 150 *µ*m bis 750 *µ*m. vorzugsweise von 200 *µ*m bis 600 *µ*m, abzüglich der Stegbreite von 50 *µ*m bis 100 *µ*m, liegt.

13. Formgebungswerkzeug nach einem der Ansprüche 10 bis 12, dadurch gekennzeichnet, daß der Abstand der Bänder voneinander etwa 20 *µ*m bis 120 *µ*m beträgt.

14. Formgebungswerkzeug nach einem der Ansprüche 9 bis 13, dadurch gekennzeichnet, daß im Formgebungswerkzeug (1) achsenparallel beabstandet zu der als Basiswerkzeug (6) dienenden Walze eine zweite Hilfswalze (11) vorgesehen ist, und das Bandmaterial (7a) über beide Walzen (6,11) durch eine Führungsstruktur, gebildet durch senkrecht zur Walzenachse geschlossene Ringe, beabstandet, abwickelbar ist, unter kontinuierlichem Zuführen und Abführen des Bandmaterials.

15. Formgebungswerkzeug nach Anspruch 14, dadurch gekennzeichnet, daß der als Basiswerkzeug (6) dienenden Walze mindestens eine Zuführeinrichtung für das Bandmaterial und der Hilfswalze (11) mindestens eine Abführeinrichtung für das Bandmaterial (7a) zugeordnet ist.

16. Formgebungswerkzeug nach Anspruch 14 oder 15, dadurch gekennzeichnet, daß zum Spannen des über die Basiswalze (6) und die Hilfswalze (11) umlaufenden Bandmaterials (7a) eine zusätzliche Spannwalze (12) vorgesehen ist.

17. Formgebungswerkzeug nach einem der Ansprüche 1 bis 16, dadurch gekennzeichnet, daß die erhabenen Strukturteile der strukrurgebenden Oberfläche (2) des Formwerkzeugs (7) eine vorgegebene Konizität zum besseren Auslösen aus der geformten Glasstruktur aufweisen.

## Claims

1. Forming tool (1) for forming structures in flat glass (3), which tool comprises a base tool (6) and a separate shaping tool (7, 7a) arranged thereon with a structure-imparting surface (2), characterized in that the base tool (6) consists of a material with a low thermal conductivity and expansion and the shaping tool (7, 7a) consists of a material with a higher thermal conductivity.

2. Forming tool according to Claim 1, characterized in that the base tool (6) consists of ceramic.

3. Forming tool according to Claim 1 or 2, characterized in that the shaping tool (7) is formed by a structured sheet-metal part which has apertures (7b) or indentations for forming purposes.

4. Forming tool according to Claim 3, characterized in that the thickness of the sheet-metal part is from 50 µm to 600 µm, preferably from 100 µm to 250 µm.

5. Forming tool according to Claim 4, characterized in that the distances between the apertures (7b) or indentations lie in the range from 150 to 750 µm.

6. Forming tool according to one of Claims 3 to 5, characterized in that the structured sheet-metal part (7) is releasably attached to the base tool (6).

7. Forming tool according to Claim 6, characterized in that the structured sheet-metal part (7) is attached to the base tool (6) in such a manner that it can be unwound therefrom.

8. Forming tool according to one of Claims 1 to 7, characterized in that the base tool (6) is structured (7c) in order to fix the shaping tool (7) on the base tool.

9. Forming tool according to one of Claims 1 to 8, characterized in that the base tool (6) is a roller.

10. Forming tool according to Claim 9, characterized in that the shaping tool (7) comprises a strip material (7a) which is wound around the base tool (6), which is designed as a roller.

11. Forming tool according to Claim 10, characterized in that the roller of the base tool has a guide structure for the strip material with helically arranged webs.

12. Forming tool according to Claim 11, characterized in that the width of the strip (7a) is in the range from 150 µm to 750 µm, preferably from 200 µm to 600 µm, minus the web width of 50 µm to 100 µm.

13. Forming tool according to one of Claims 10 to 12, characterized in that the distance between the strips is approximately 20 µm to 120 µm.

14. Forming tool according to one of Claims 9 to 13, characterized in that a second, auxiliary roller (11) is provided in the forming tool (1), axially parallel to and at a distance from the roller which serves as the base tool (6), and the strip material (7a) can be unwound over both rollers (6, 11), at a distance, through a guide structure formed by continuous rings which are perpendicular to the roller axis, with the strip material being supplied and removed continuously.

15. Forming tool according to Claim 14, characterized in that the roller which serves as the base tool (6) is assigned at least one supply device for the strip material and the auxiliary roller (11) is assigned at least one removal device for the strip material (7a).

16. Forming tool according to Claim 14 or 15, characterized in that an additional tensioning roller (12) is provided for the purpose of tensioning the strip material (7a) passing over the base roller (6) and the auxiliary roller (11).

17. Forming tool according to one of Claims 1 to 16, characterized in that the raised structural parts on the structure-imparting surface (2) of the shaping tool (7) are of a predetermined conicity for facilitating its release from the shaped glass structure.

## Revendications

1. Outil de formage (1) pour former des structures en verre plat (3), qui est constitué d'un outil de base (6) et d'un outil de façonnage séparé (7, 7a) disposé sur ce dernier avec une surface structurante (2), caractérisé en ce que l'outil de base (6) est constitué d'un matériau ayant une faible conductibilité thermique et une faible dilatation, tandis que l'outil de façonnage (7, 7a) est constitué d'un matériau ayant une conductibilité thermique plus élevée.

2. Outil de formage selon la revendication 1, caractérisé en ce que l'outil de base (6) est constitué d'un matériau céramique.

3. Outil de formage selon la revendication 1 ou 2, caractérisé en ce que l'outil de façonnage (7) est formé par une pièce structurée de tôle, qui possède des ouvertures (7b) ou des indentations pour le formage.

4. Outil de formage selon la revendication 3, caractérisé en ce que la pièce de tôle possède une épaisseur de 50 µm à 600 µm, de préférence de 100 µm à 250 µm.

5. Outil de formage selon la revendication 4, caractérisé en ce que les distances des ouvertures (7b) ou des indentations se situent dans la plage de 150 à 750 µm.

6. Outil de formage selon l'une quelconque des revendications 3 à 5, caractérisé en ce que la pièce structurée de tôle (7) est fixée sur l'outil de base (6) de manière amovible.

7. Outil de formage selon la revendication 6, caractérisé en ce que la pièce structurée de tôle (7) est fixée sur l'outil de base (6) de manière à pouvoir être déroulée par lui.

8. Outil de formage selon l'une quelconque des revendications 1 à 7, caractérisé en ce que l'outil de base (6) présente une structuration (7c) pour fixer l'outil de façonnage (7) sur l'outil de base.

9. Outil de formage selon l'une quelconque des revendications 1 à 8, caractérisé en ce que l'outil de base (6) est un rouleau.

10. Outil de formage selon la revendication 9, caractérisé en ce que l'outil de formage (7) est constitué d'un matériau sous forme de bande (7a) enroulé autour de l'outil de base (6) conformé en rouleau.

11. Outil de formage selon la revendication 10, caractérisé en ce que le rouleau de l'outil de base présente une structure de guidage pour le matériau sous forme de bande avec des arêtes agencées en hélice.

12. Outil de formage selon la revendication 11, caractérisé en ce que la largeur de la bande (7a) se situe dans la plage de 150 µm à 750 µm, de préférence de 200 µm à 600 µm, déduction faite de la largeur des arêtes de 50 µm à 100 µm.

13. Outil de formage selon l'une quelconque des revendications 10 à 12, caractérisé en ce que la distance mutuelle des bandes est d'environ 20 µm à 120 µm.

14. Outil de formage selon l'une quelconque des revendications 9 à 13, caractérisé en ce qu'il est prévu, dans l'outil de formage (1), un deuxième rouleau auxiliaire (11) espacé du rouleau servant d'outil de base (6), leurs axes étant parallèles, et le matériau sous forme de bande (7a) est espacé via les deux rouleaux (6,11) par une structure de guidage formée par des anneaux fermés perpendiculairement à l'axe des rouleaux et peut être déroulé avec amenée et évacuation en continu de matériau sous forme de bande.

15. Outil de formage selon la revendication 14, caractérisé en ce qu'au rouleau servant d'outil de base (6) est affecté au moins un équipement d'amenée pour le matériau en bande et au rouleau auxiliaire (11) est affecté au moins un équipement d'évacuation pour le matériau en bande (7a).

16. Outil de formage selon la revendication 14 ou 15, caractérisé en ce qu'il est prévu un rouleau tendeur supplémentaire (12) pour tendre le matériau en bande (7a) circulant via le rouleau de base (6) et le rouleau auxiliaire (11).

17. Outil de formage selon l'une quelconque des revendications 1 à 16, caractérisé en ce que les parties structurelles saillantes de la surface structurante (2) de l'outil de façonnage (7) présentent une conicité prédéterminée pour un meilleur détachement de la structure de verre façonnée.
